# EUROPEAN PATENT APPLICATION

(11) **EP 2 937 253 A1**
(43) Date of publication of application: **28.10.2015**
(21) Application number: 15153793.3
(22) Date of filing: 04.02.2015
(51) Int. Cl.: B60T 15/04, B60T 15/18

(54) **Air brake system valve for trailers**

(30) Priority: 21.04.2014 TR 201404557
(71) Applicant: Filkar Otomotiv sanayi ve Ticaret Anonim Sirketi, Konya (TR)
(72) Inventor: Fil, Mustafa, KONYA (TR)
(74) Representative: Iskender, Ibrahim

(57) **Abstract**

The invention relates to an air brake system valve (10) comprising retaining ring (24), and spring top bearing lower casing (21) and spring top bearing top casing (22) which provide sealing by covering the valve seat together with the valve centering device (17) and seal O-ring (20) on the control valve (16) which enables flow of air from inlet port (12) to the air exhaust port (13), characterized in comprising a special casing (11) that harbors the live parts of said valve (10) and enables linking of the valve (10) on the vehicle; a front cover (25) covering the top part of the casing and exhausting air from said valve (10) together with camoperated exhaust (23); an exhaust (26) that enables exhausting exhaust air from said valve (10); a drive shaft (29) driven within said valve (10) and operating the piston (28) and the control valve (16), and a rear cover (30) covering the bottom part of said valve (10).

## Description

### TECHNICAL FIELD

The invention relates to an air brake valve for trailers which is driven by tractor right and/or left hydraulic, mechanic and pneumatic brake line and tractor hand brake line and enables safe braking of the trailers towed by tractors, combine harvesters, engineering vehicles and forest vehicles.

### PRIRO ART

Today, trailers are attached to and towed by vehicles, such as tractors, combine harvesters, engineering vehicles, and forest vehicles. Air brake systems are developed in order to enable braking of such vehicles at a very low pressure when the weight of the trailer is added to the self-weight of such vehicles.

Due to aforementioned reason, it is very important to keep the pace with the technology especially at such vehicles. Currently numerous valves are manufactured worldwide. Although all valves perform the same function, such valves are not suitable for every tractor, combine harvester, engineering vehicle and forest vehicle. Such valves are generally customized and can be used only at one of such vehicles.

Furthermore, another problem experienced in the prior art is the failure to receive any precise air exhaust signal depending on the excitation given at the air brake system. As braking capability and properties of each vehicle differ from each other, desired precision cannot be achieved for each vehicle. Therefore, individual valves should be developed for each vehicle.

When the excitation at the air brake system is removed, the system is expected to return to the neutral position in the shortest time possible. Valves available in the prior art not only fail to meet such expectations, but also requires prolonged times to return neutral position when the excitation is removed, which, in turn, prevents re-use of air brake system for certain duration.

Air brake systems are products with high cost; therefore, any problem such as malfunction, repair, and replacement of parts might induce high costs. The costs have not been considered to a great extent in the prior art and no significant endeavor has been made for the sake of reducing costs. High costs leads to very significant problems for both the manufacturers and the users, thus reducing the costs of such systems is of paramount importance.

The invention presented in PCT application no. TR2006/05110 relates to control valves for air brake systems for the trailers which returns to neutral position swiftly, characterized in that the valve comprises of a longitudinally vertical hole, longitudinally movable control piston and said movable piston is formed as linked with the connection piston and the valve piston in such manner to move through control drive on the piston work surface. In this context, simply the trailer control valve is differentiated from the structural aspect. For this purpose, the changeover piston is designed with a secondary piston in order to exert pressure on the work surface and the first and second pistons operate at different directions. The secondary function area of the piston has a work area of greater diameter compared to the diameter of the valve piston.

The TPE patent no. TR2009/02673, on the other hand, is a mechanism that enables control of the trailers with air brake system at tractors with mechanical brake system. The invention is used at the tractors with mechanical brake system for controlling trailers with brake spring braking by means of cutting pressurized air and the trailers with service brake braking by means of supplying air to the system and the trailers bearing both conditions simultaneously. The invention releases the brakes by supplying air from one of its circuits as long as the tractor is not engaging the brakes while the other circuit cuts pressurized air exhaust. In case the tractor engages brakes, the brake bellows spring engages braking by cutting pressurized air at one of the circuits while the other circuit supplies pressurized air to the trailer brake system, thus engages brakes at service brake bellows. Both features of the brake system are controlled simultaneously. The exhaust air generated as a result of use within the system is exhausted within its structure.

However, as can be seen from the aforementioned examples, it is failed to propound a cost-effective air brake system valve that returns to the neutral position of the system at the shortest time possible when the excitation on the system is removed and suitable for each tractor, combine harvester, engineering vehicle and forest vehicle.

In conclusion, a need for innovation at the concerned technical field has emerged due to aforementioned disadvantages.

### BRIEF DESCRIPTION OF THE INVENTION

Present invention relates to an air brake system valve that eliminates all aforementioned disadvantages and provides some additional advantages to the applicable technical field.

The primary object of the invention is to propound a product at universal structure by changing the loads acting on the springs that direct and condition pressurized air.

Another object of the invention is to achieve precise air exhaust signal compliant with such vehicles by propounding a product having flexible structure conforming variable braking capabilities and properties of the vehicles where the product will be used.

Another object of the invention is to design a product capable of returning the valve neutral position with a very swift response time by virtue of the drive mechanism of the invention when the excitement on the valve is removed.

Another object of the invention is to minimize the production costs.

The invention propounds a product that does not fail frequently.

The invention ensures sealing by virtue of O-rings, spring top bearing top casing and spring top bearing lower casing, thus prevents problems that will emerge due to leaks.

In order to fulfill aforementioned objects;
The invention relates to an air brake system valve comprising retaining ring, and spring top bearing lower casing and spring top bearing top casing which provide sealing by covering the valve seat together with the valve centering device and seal O-ring on the control valve which enables flow of air from inlet port to the exhaust port, characterized in comprising
- a special casing that harbors the live parts of said valve and enables linking of the valve on the vehicle;
- a control valve that enables flow of air from inlet port to the exhaust port as driven by the drive shaft and piston of said valve;
- a piston that moves with the drive shaft of said valve and enables flow of air within the valve from inlet port and pass to the exhaust port;
- a spring that returns the control valve back to its slot when the excitement on the piston of said valve is removed; a cam-operated exhaust that exhausts exhaust air from said valve together with the front cover;
- a front cover covering the top part of the casing and exhausting air from said valve together with cam-operated exhaust; and
- exhaust that enables exhausting exhaust air from said valve; a drive shaft driven within said valve and operating the piston and the valve;
- rear cover covering the bottom part of said valve.

### DESCRIPTION OF FIGURES

Additional features and advantages of the invention will be revealed from exemplary embodiments referencing to the accompanying figures.
Figure 1 - perspective view of the front-pull air brake system valve that subjects to the invention.

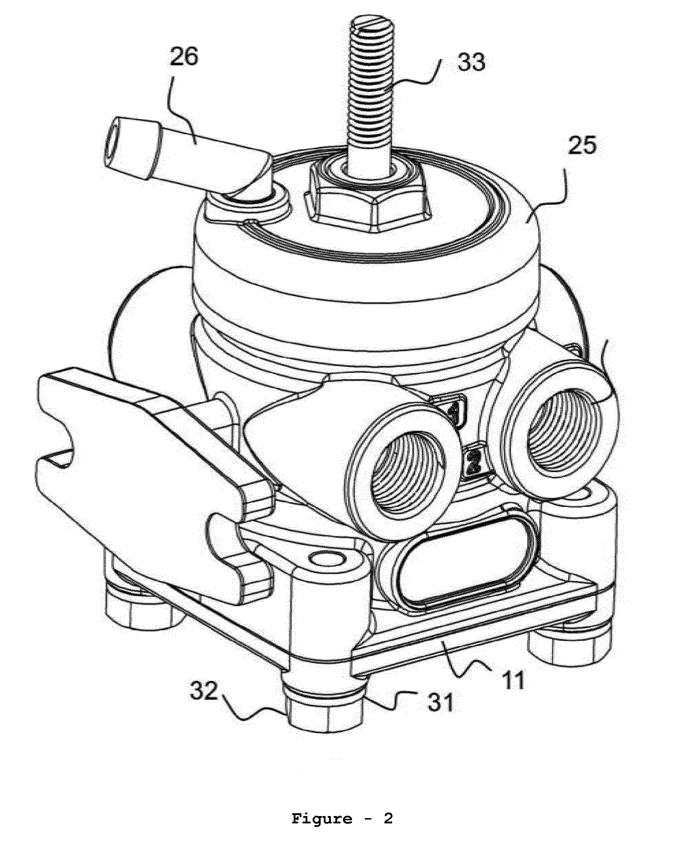

Figure 2 - perspective view of the front-pull air brake system valve that subjects to the invention, from a different angle.

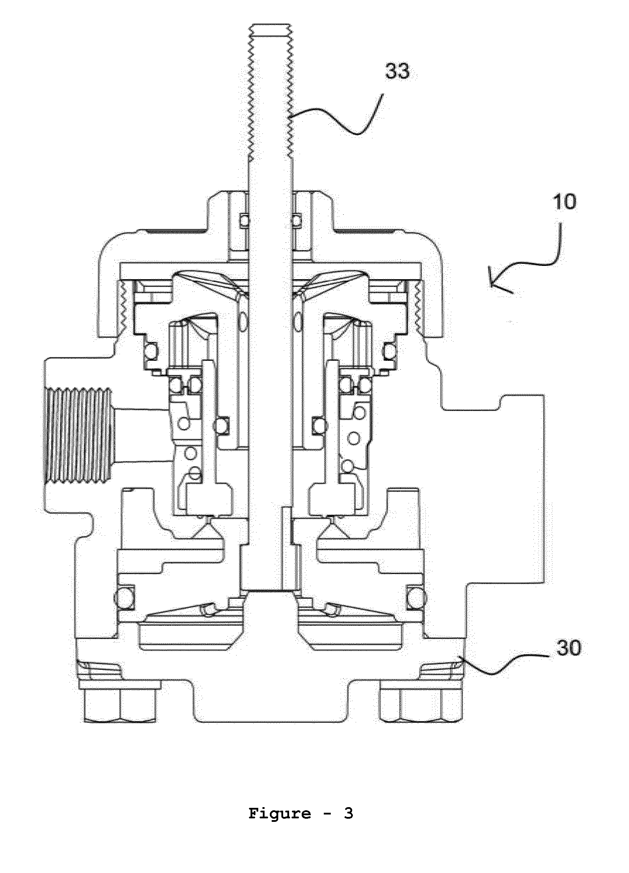

Figure 3 - cross-sectional view of the front-pull air brake system valve that subjects to the invention.

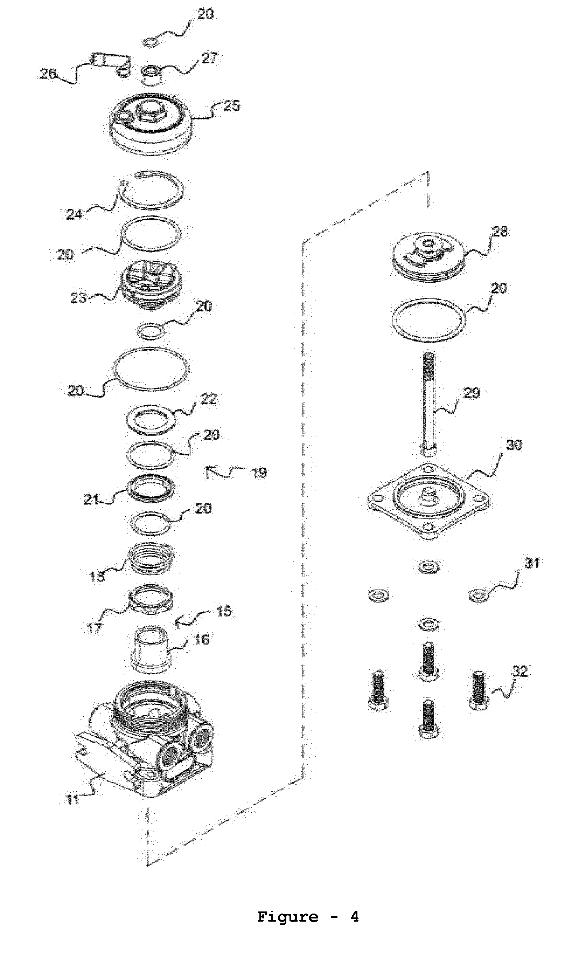

Figure 4 - exploded perspective view of the front-pull air brake system valve that subjects to the invention.
Figure 5 - perspective view of the rear-push air brake system valve which is an alternate embodiment of the valve that subjects to the invention.

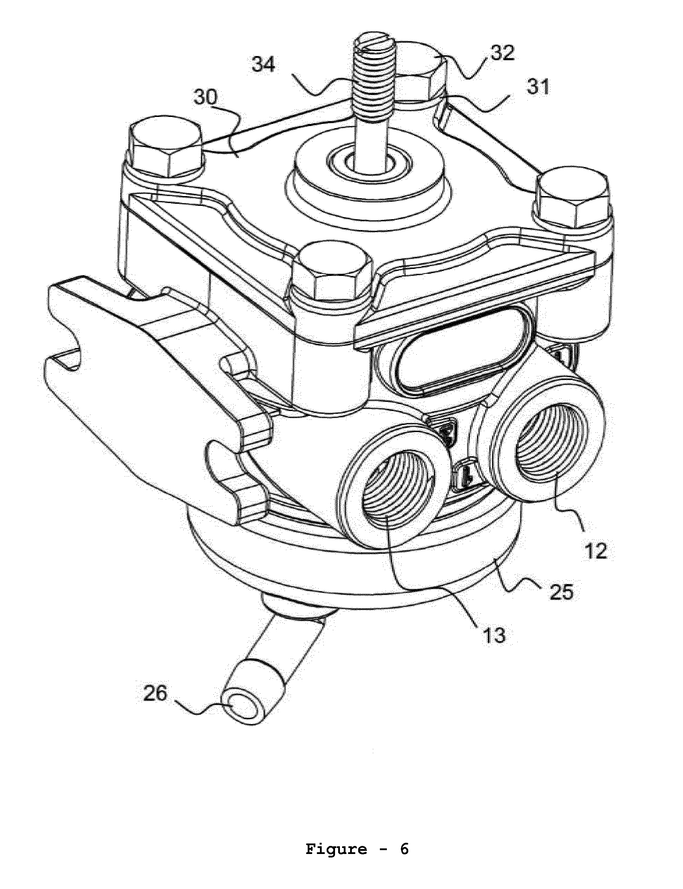

Figure 6 - bottom perspective view of the rear-push air brake system valve which is an alternate embodiment of the valve that subjects to the invention.

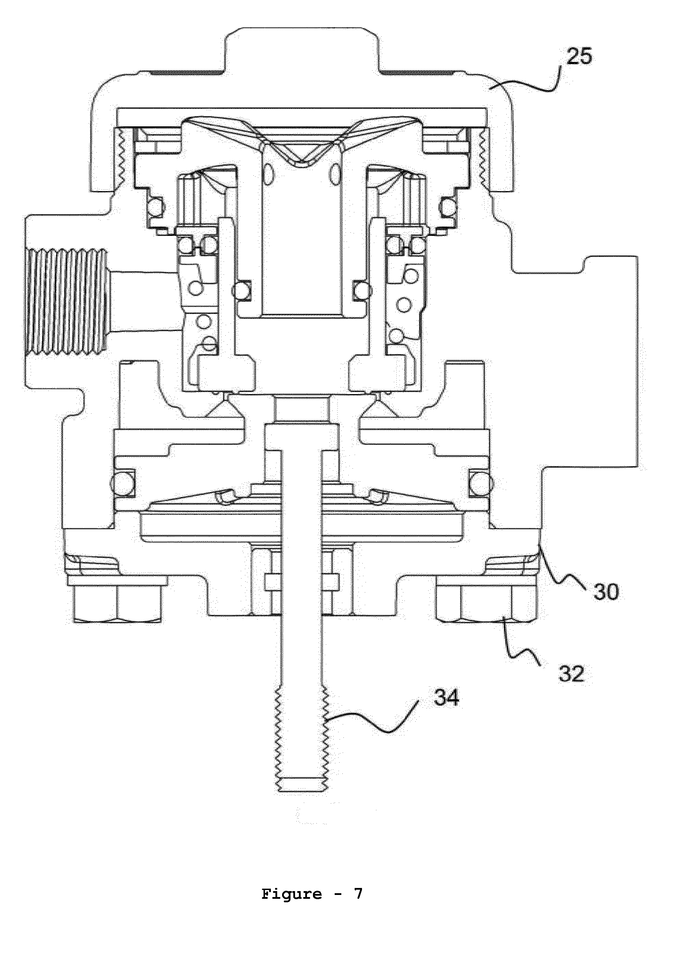

Figure 7 - cross-sectional view of the rear-push air brake system valve which is an alternate embodiment of the valve that subjects to the invention.

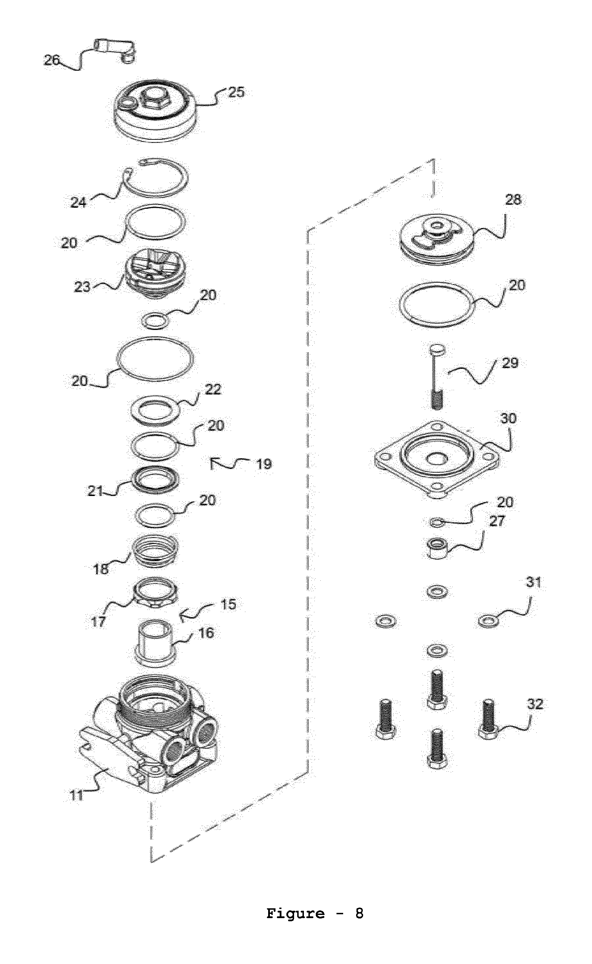

Figure 8 - Exploded perspective view of the rear-push air brake system valve which is an alternate embodiment of the valve that subjects to the invention.
Figure 9 - perspective view of the cyclic air brake system valve which is an alternate embodiment of the valve that subjects to the invention.

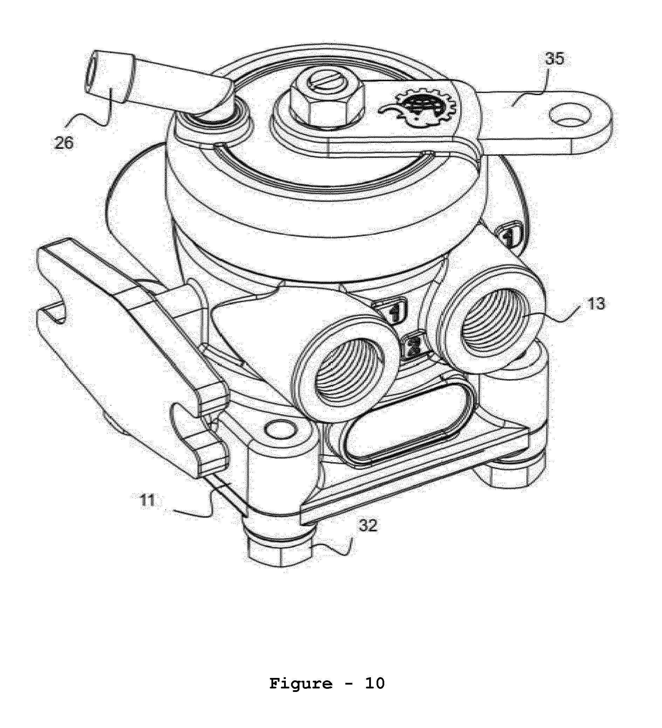

Figure 10 - perspective view of the cyclic air brake system valve which is an alternate embodiment of the valve that subjects to the invention, from a different angle.

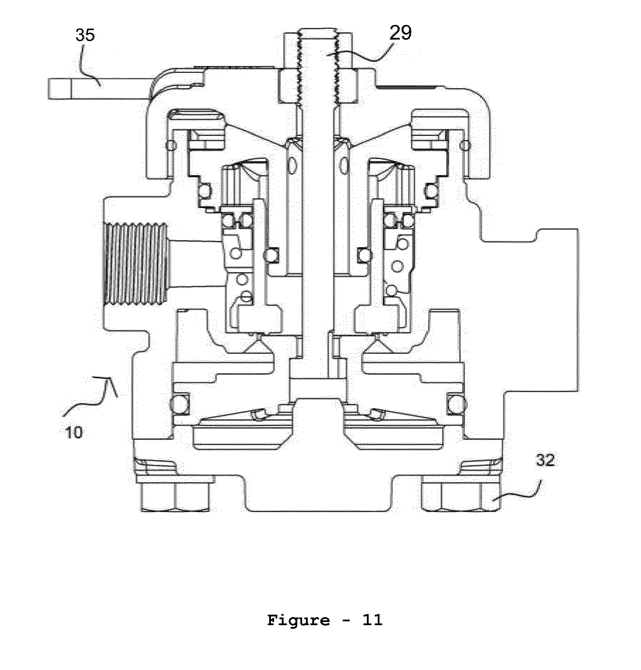

Figure 11 - cross sectional view of the cyclic air brake system valve which is an alternate embodiment of the valve that subjects to the invention.

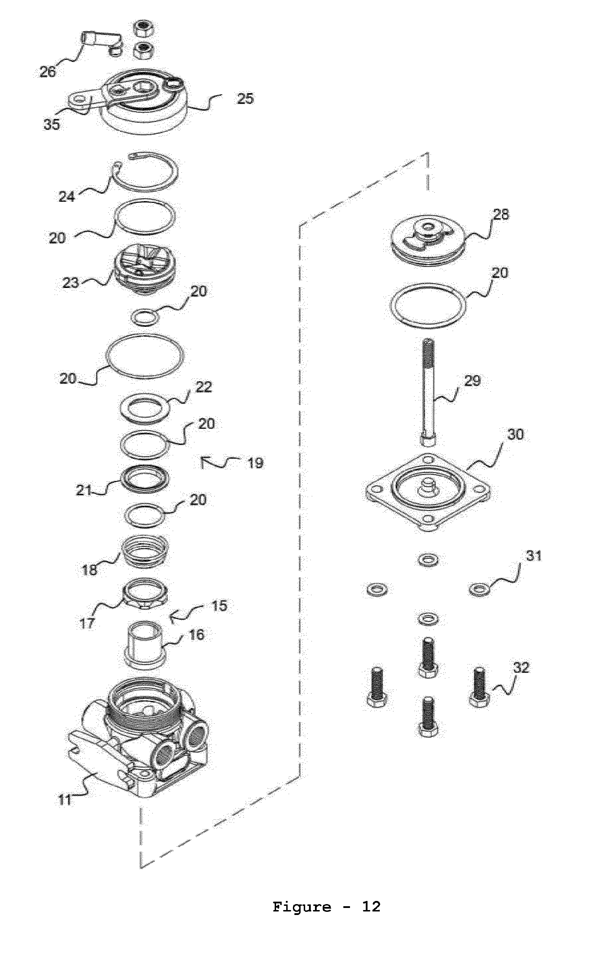

Figure 12 - exploded perspective view of the cyclic air brake system valve which is an alternate embodiment of the valve that subjects to the invention.

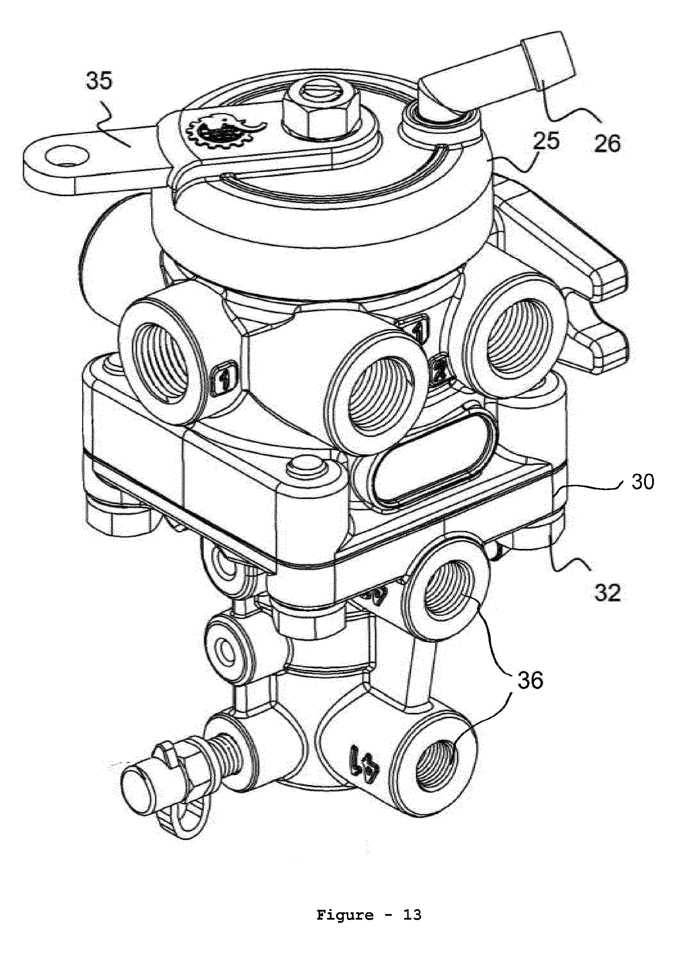

Figure 13 - perspective view of the single hydraulic inlet air brake system valve which is an alternate embodiment of the valve that subjects to the invention.

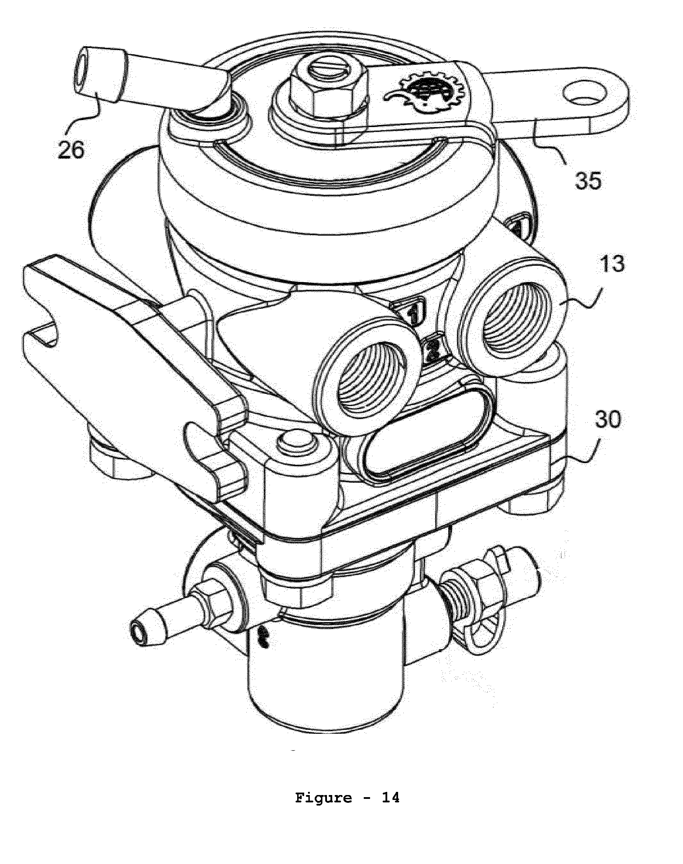

Figure 14 - perspective view of the single hydraulic inlet air brake system valve which is an alternate embodiment of the valve that subjects to the invention, from a different angle.

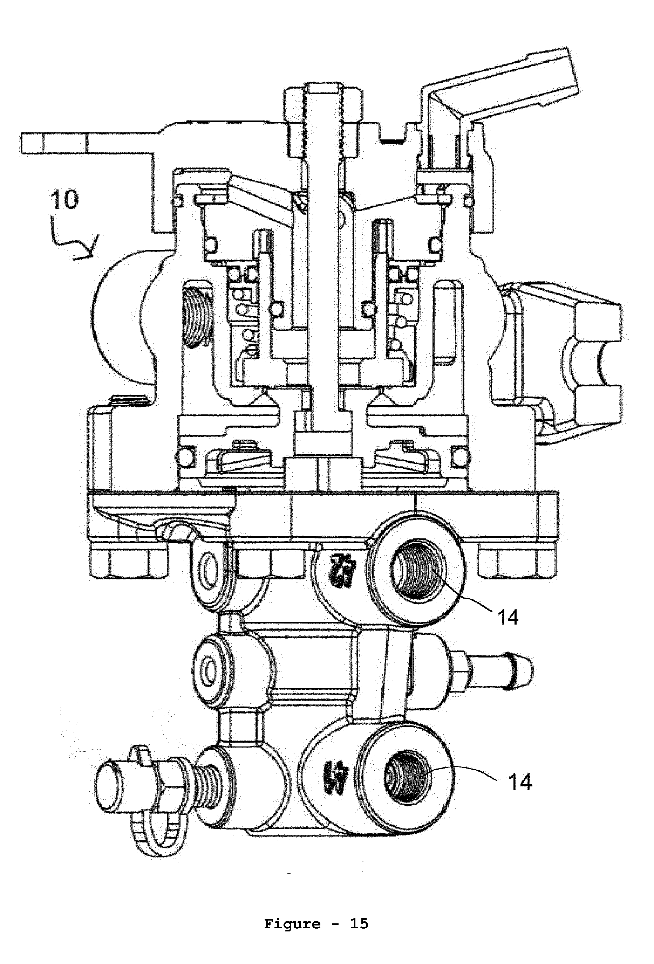

Figure 15 - cross sectional view of the single hydraulic inlet air brake system valve which is an alternate embodiment of the valve that subjects to the invention.

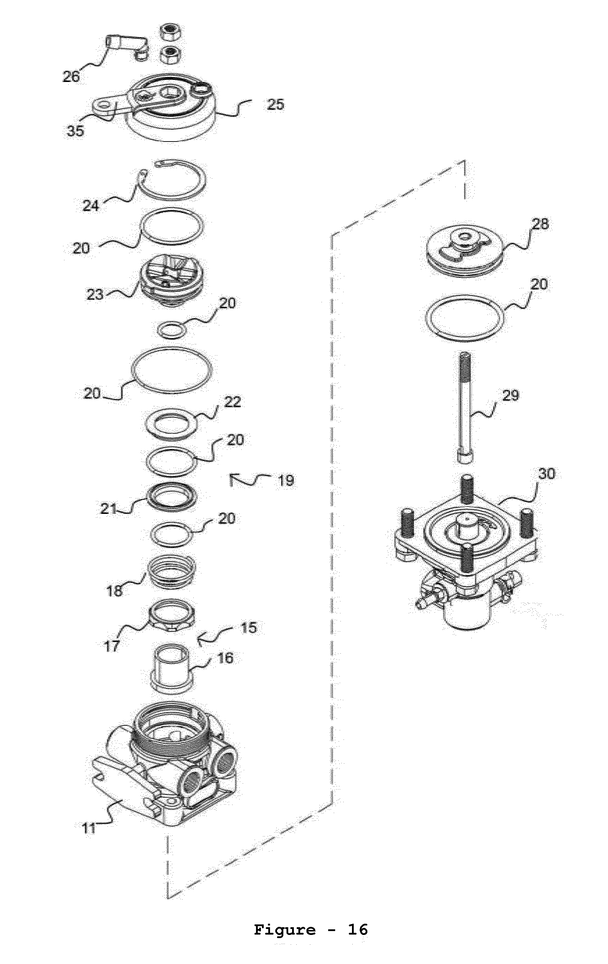

Figure 16 - exploded perspective view of the single hydraulic inlet air brake system valve which is an alternate embodiment of the valve that subjects to the invention.

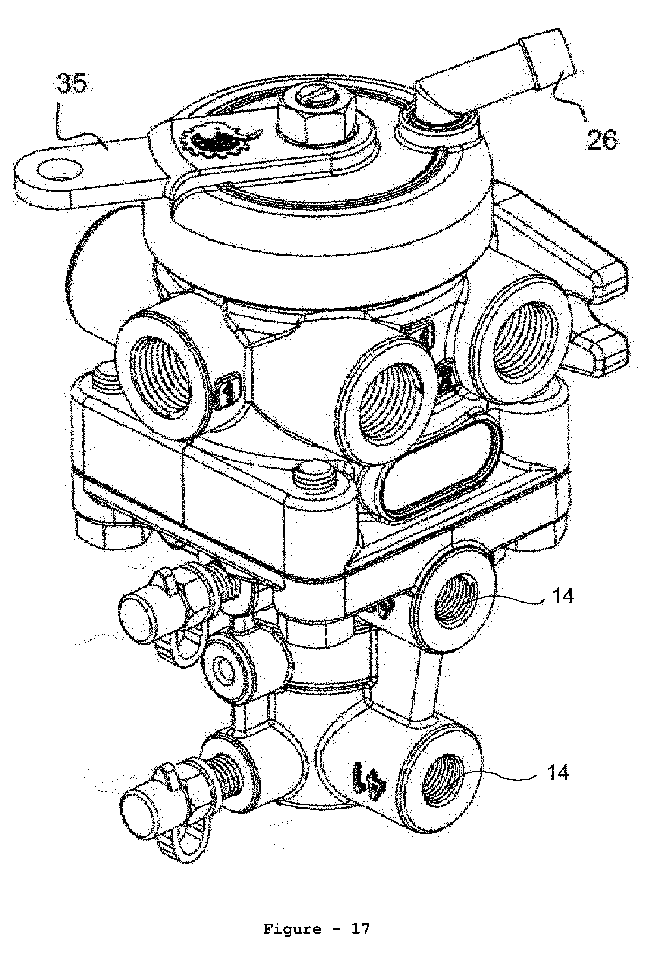

Figure 17 - perspective view of the dual hydraulic inlet air brake system valve which is an alternate embodiment of the valve that subjects to the invention.

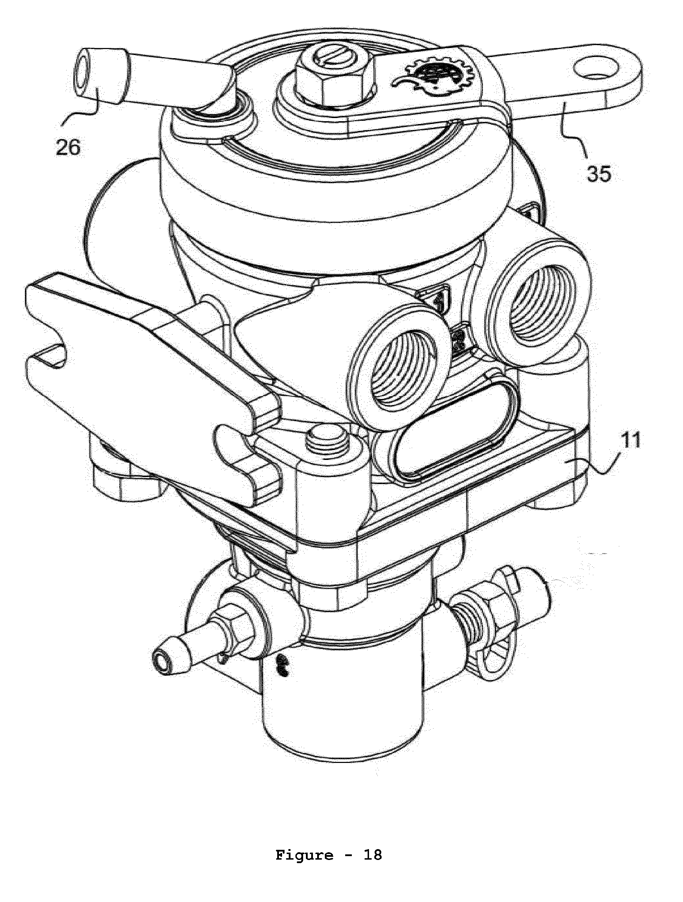

Figure 18 - perspective view of the dual hydraulic inlet air brake system valve which is an alternate embodiment of the valve that subjects to the invention, from a different angle.

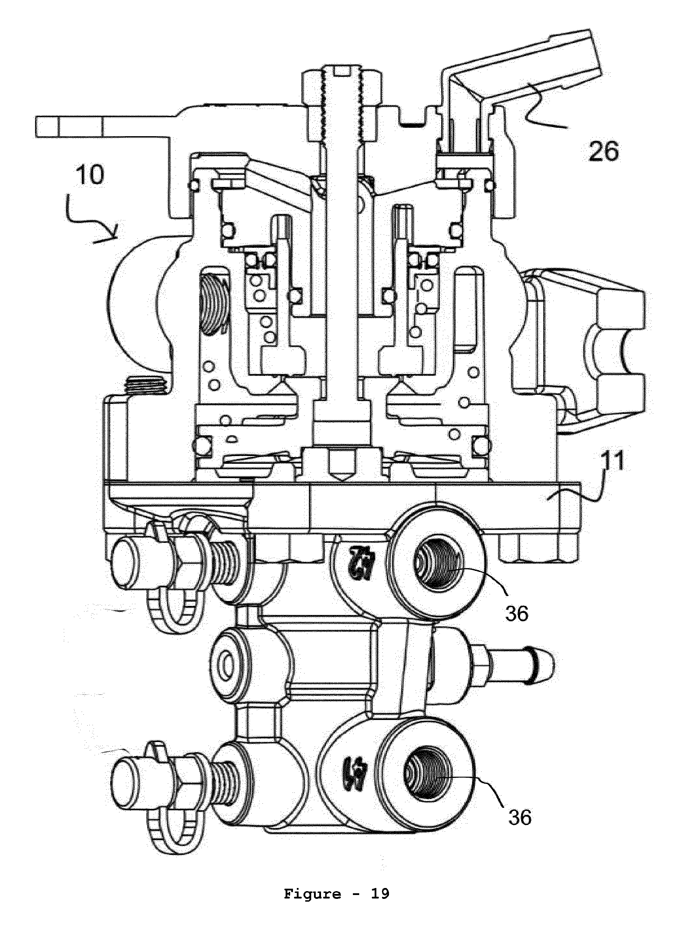

Figure 19 - cross sectional view of the dual hydraulic inlet air brake system valve which is an alternate embodiment of the valve that subjects to the invention.

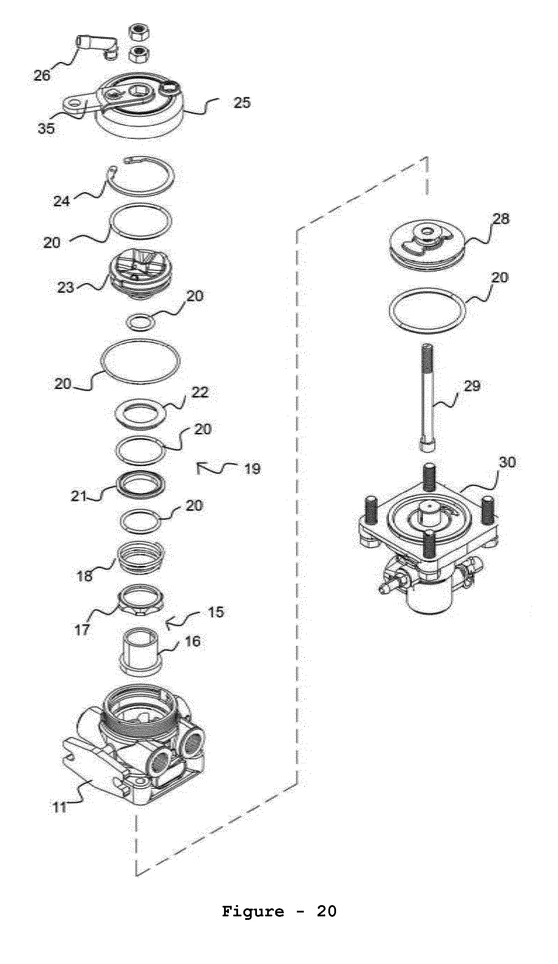

Figure 20 - exploded perspective view of the dual hydraulic inlet air brake system valve which is an alternate embodiment of the valve that subjects to the invention.

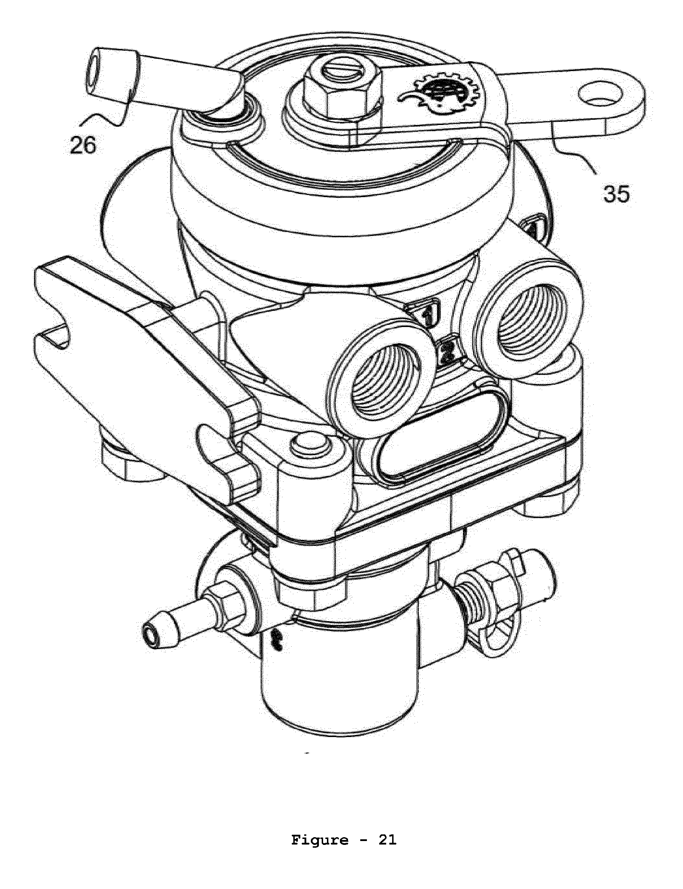

Figure 21 - perspective view of the pneumatic and hydraulic inlet air brake system valve which is an alternate embodiment of the valve that subjects to the invention.

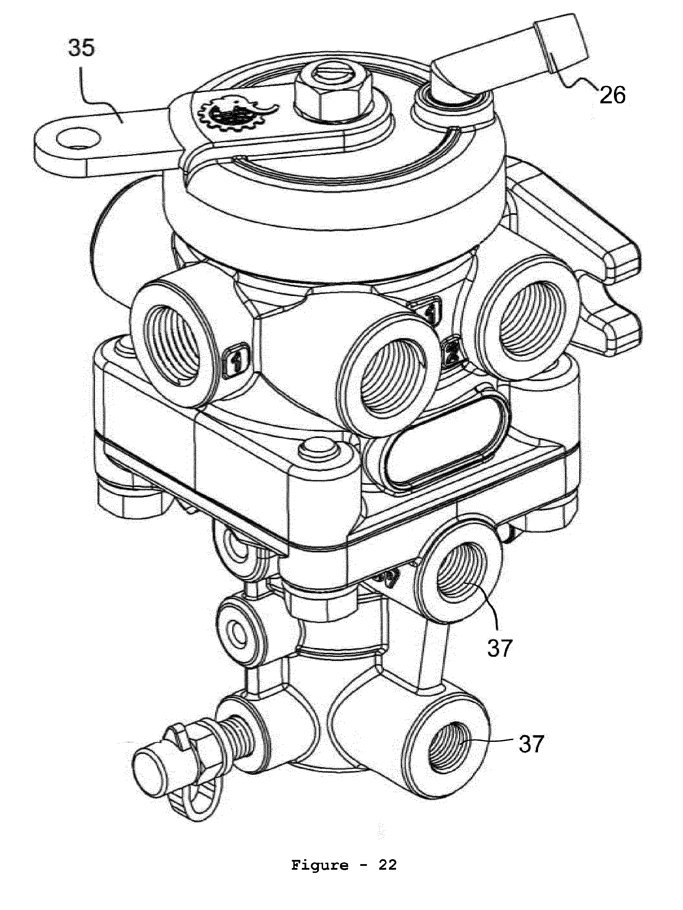

Figure 22 - perspective view of the pneumatic and hydraulic inlet air brake system valve which is an alternate embodiment of the valve that subjects to the invention, from a different view.

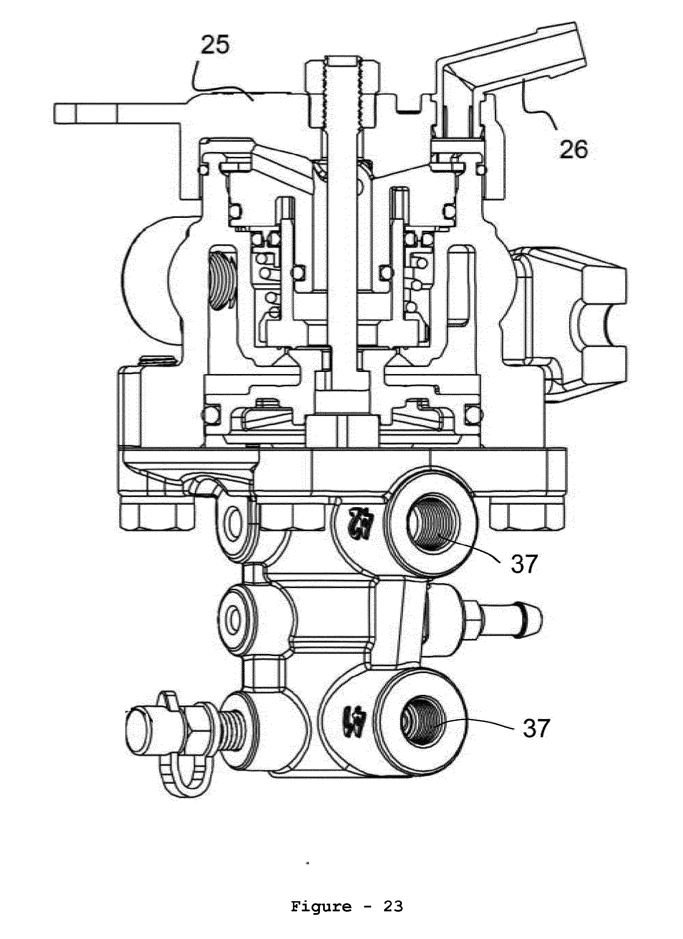

Figure 23 - cross-sectional view of the pneumatic and hydraulic inlet air brake system valve which is an alternate embodiment of the valve that subjects to the invention.

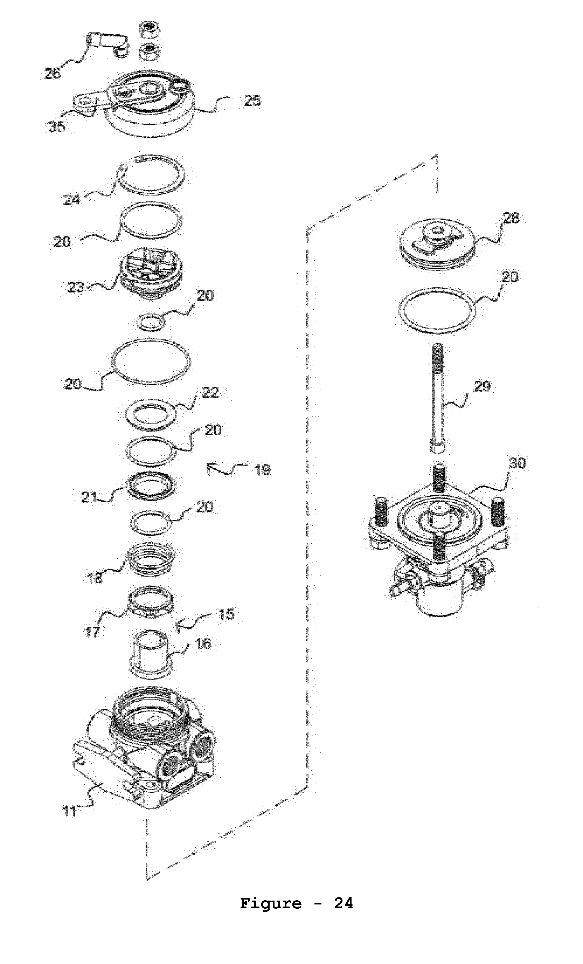

Figure 24 - exploded perspective view of the pneumatic and single hydraulic inlet air brake system valve which is an alternate embodiment of the valve that subjects to the invention.

The drawings are not necessarily drawn to scale and details not required for comprehending the present invention might have been omitted. Furthermore, elements that are at least substantially identical or that have at least substantially identical functions are illustrated with the same numbers.

**REFERENCE NUMBERS**

| | |
|---|---|
| 10 - Valve | 24 - Retaining Ring |
| 11 - Casing | 25 - Front Cover |
| 12 - Air Inlet Port | 26 - Exhaust |
| 13 - Air Exhaust Port | 27 - Bushing |
| 14 - Hydraulic Inlet Port | 28 - Piston |
| 15 - Spring Bottom Bearing | 29 - Drive Shaft |
| 16 - Control Valve | 30 - Rear Cover |
| 17 - Valve Centering Device | 31 - Washer |
| 18 - Spring | 32 - Bolt |
| 19 - Spring Top Bearing | 33 - Pull Section |
| 20 - Sealing O-rings | 34 - Push Section |
| 21 - Spring Top Bearing Lower Casing | 35 - Rotation Section |
| 22 - Spring Top Bearing Top Casing | 36 - Hydraulic Inlet |
| 23 - Cam-operated Exhaust | 37 - Hydraulic and Pneumatic Inlet |

### DETAILED DESCRIPTION OF THE INVENTION

In this detailed description, preferred embodiments of the valve (10) of the invention are explained only for better understanding of the subject and are not intended to be restrictive in any manner.

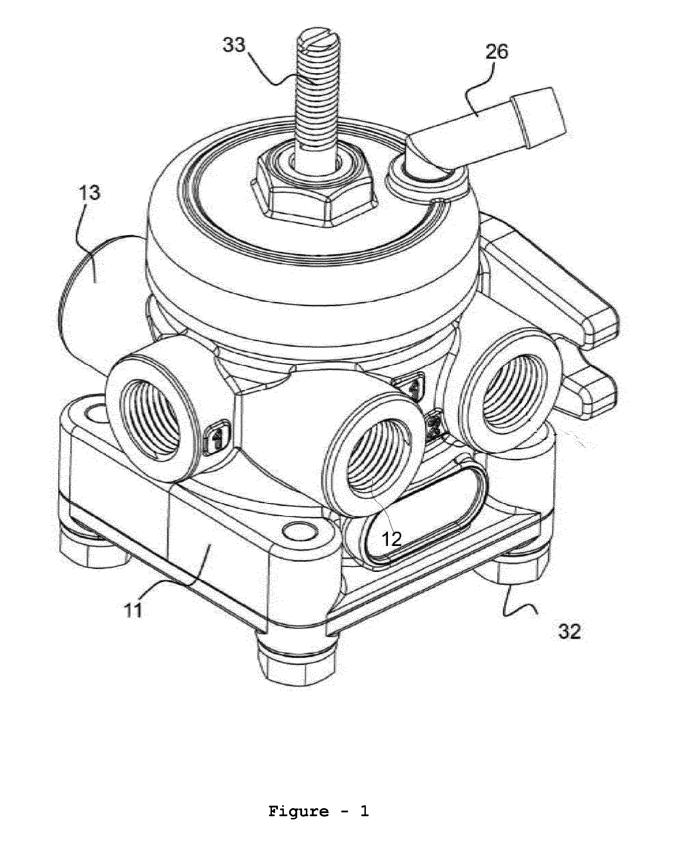

The valve (10) illustrated in perspective view in Figure 1 is shaped with a casing (11) the bottom part of which coarsely resembles a rectangular prism structure placed at the center for air brake systems, wherein the top part of the casing contains cylindrical air inlet and exhausts. The top part of the casing is shaped to resemble a cylindrical form.

The valve (10) formed for executing the braking operation in an ideal form functions in three distinct manners, which are the pushing force generated through various methods in alternate embodiments of the valve, the pulling force generated through various methods and the rotational force generated through various methods. The pushing force required for operating the valve, on the other hand, can be supplied by means of a single channel hydraulic, dual channel hydraulic, one channel hydraulic and one channel pneumatic and mechanical rod. There are three air inlet ports (12) and two air exhaust ports (13) on the valve casing (11). An alternate embodiment operating with hydraulic support, on the other hand, contains minimum 1 hydraulic inlet port (14). Assembly of valve on the vehicle is performed by means of the mountings with crescent slots on the casing (11). The sealing O-ring (20) is mounted to the piston (28) while the drive shaft (29) and the piston (28) are mounted to the bottom part of the casing (11) together with the rear cover (30). The drive shaft (29), on the other hand, is embedded with the bushing (27). The bolts (32) are equipped with washers (31). Likewise, it contains push section (34), pull section (33) or rotation section (35), which drive the system. Air inlet (12) and air exhaust (13) ports are separated from each other by the control valve (16). The control valve (16) and the valve centering device (17) are positioned immediately above the casing. The spring (18), on the other hand, is designed with a diameter to fit on the control valve (16). The spring top bearing (19) forming a bearing for the spring (18) is located at the top part of the spring (18). This section comprises O-ring (20) at the very bottom, spring top bearing lower casing (21) above this section, again an O-ring (20) and the spring top bearing top casing (22). The spring top bearing top casing (22) fits on the spring top bearing lower casing (21). The spring bottom bearing (15), on the other hand, comprises control valve (16) and valve centering device (17). The spring bottom bearing (15) and the spring top bearing (19) respectively are designed with control valve (16) at the very bottom and the control valve (16) is overlain by valve centering device (17), spring (18), O-ring (20), spring top bearing lower casing (21), another O-ring (20) and spring top bearing top casing (22) respectively. The spring bottom bearing (15), spring (18) and the spring top bearing (19) are assembled inside the casing (11).

When the drive shaft (29) and the piston (28) are driven, the control valve (16) moves upward and the pressurized air at the valve (10) inlet is transferred to the exhaust line. There is an O-ring (20) on the plastic of the cam-operated exhaust (23) positioned on the spring top bearing (19). The front cover (25) is located at the very top of the valve (10) and the exhaust (26), from where the exhaust air is exhausted to the atmosphere, is located at the upper part of this section. The retaining ring (24), sealing O-ring (20) and cam-operated exhaust (23) are present at the bottom part of the front cover (25).

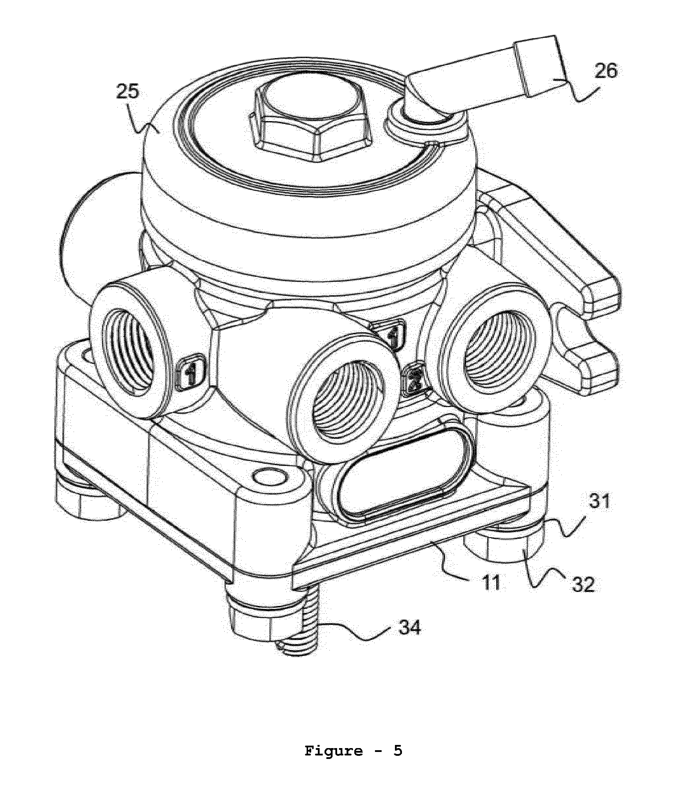

In case the valve (10), perspective view of which is illustrated in Figure 5, is operated as driven by rear-push, which is an alternate embodiment, the operating principle is as follows; linear motion is applied to the piston (28) from rear section to the front section of the valve (10) by employing any of the single channel hydraulic inlet (36), dual channel hydraulic inlet (36), one channel hydraulic and pneumatic inlet (37) and pushing with mechanical rod methods, which represent alternate embodiments. The piston (28) moves the control valve (16), and the conditioning spring (18) thereon, upwards thus setting the conditioning spring (18). The pressurized air at the inlet chamber of the casing (11) passes through the duct within the casing (11) and reaches to the exhaust chamber as the control valve (16) moves upwards. The pressurized air at the exhaust chamber is transferred to the concerned receiver from the air exhaust port (13) of the casing (11). The drive distance of the piston (28) is directly proportional with the air exhaust precision of the valve (10). When the driving force exerted on the piston (28) is removed, the set spring (18) pushes the control valve (16) back to the slot and closes the pressure line. Exhaust air in the exhaust chamber and the receiver is exhausted to atmosphere from exhaust (26) disposed on the front cover (25). There is a bypass channel for establishing pressure balance at the top part of the inlet chamber and the exhaust chamber. The valve controls the receivers that it is linked to by operating in this manner.

In case the valve (10), perspective view of which is illustrated in Figure 1, is operated as driven by pulling, which is another alternate embodiment, the operating principle of the valve (10) is very identical to operation by pushing and in case the valve (10) is operated by pulling, linear motion is applied to the piston (28) from rear section to the front section of the valve (10) by employing any of the single channel hydraulic inlet (36), dual channel hydraulic inlet (36), one channel hydraulic and pneumatic inlet (37) and pushing with mechanical rod methods, which represent alternate embodiments. The internal functioning are identical in both embodiments and the sole difference is that the valve operates through pulling method rather than single channel hydraulic, dual channel hydraulic, one channel hydraulic one channel pneumatic and pushing with mechanical rod.

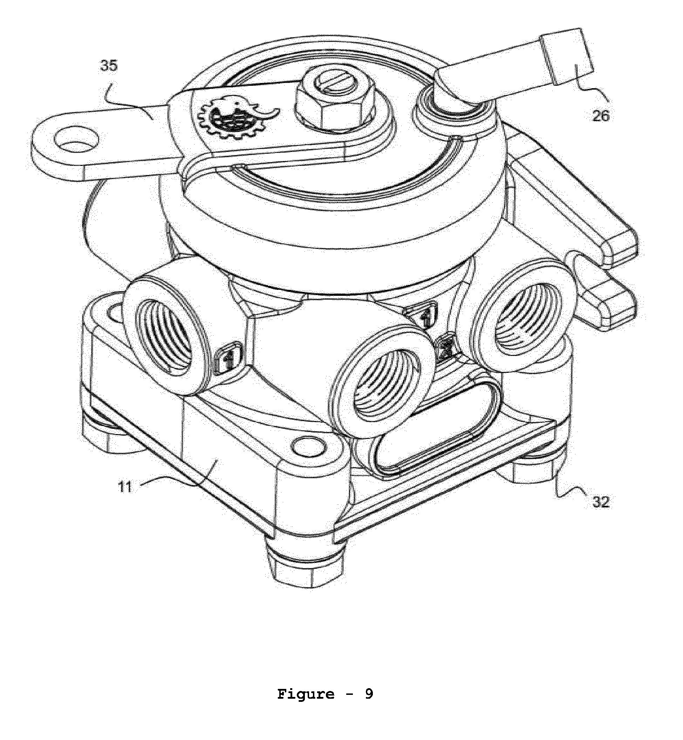

In case the valve, perspective view of which is illustrated in Figure 9, is operated as driven by rotating, which is another alternate embodiment, the operating principle of the valve is identical again and only the front cover (25) is designed to operate at 3 positions depending on the connection method of the valve. Maximum rotation angle of the front cover is 55°. The valve is at fully open position when the front cover is at 20° and 55° angle. When the front cover (25) is rotated and achieves 20° angle, the d rive shaft moves upwards for the stroke distance (4mm), thus providing the driving force required by the piston (28).

## Claims

1. An air brake system valve (10) comprising retaining ring (24), and spring top bearing lower casing (21) and spring top bearing top casing (22) which provide sealing by covering the valve seat together with the valve centering device (17) and seal O-ring (20) on the control valve (16) which enables flow of air from inlet port (12) to the air exhaust port (13), **characterized in** comprising;
- a casing (11) that harbors the live parts of said valve (10) and enables linking of the valve (10) on the vehicle;
- a control valve (16) that enables flow of air from inlet port (12) to the air exhaust port (13) as driven by the drive shaft (29) and piston (28) of said valve (10);
- a piston (28) that moves with the drive shaft (29) of said valve (10) and enables flow of air within the valve (10) from inlet port (12) and pass to the air exhaust port (13) and the exhaust (26);
- a spring (18) that returns the control valve (16) back to its slot when the excitement on the piston (28) of said valve (10) is removed;
- a cam-operated exhaust (23) that exhausts air through said valve (10);
- a front cover (25) covering the top part of the casing and exhausting air from said valve (10) together with cam-operated exhaust (23);
- an exhaust (26) that enables exhausting exhaust air from said valve (10);
- a drive shaft (29) driven within said valve (10) and operating the piston (28) and the control valve (16), and
- a rear cover (30) covering the bottom part of said valve (10).

2. The valve (10) according to claim 1, **characterized in** comprising push section (34), pull section (33) or rotation section (35), driving the system.

3. The valve (10) according to claim 1, **characterized in** comprising at least one hydraulic inlet (36) or hydraulic and pneumatic inlet (37) generating pushing force.
